# NEUE EUROPÄISCHE PATENTSCHRIFT

(11) **EP 2 604 478 B2**
(45) Veröffentlichungstag und Bekanntmachung des Hinweises auf die Entscheidung über den Einspruch: **31.03.2021**
(45) Hinweis auf die Patenterteilung: 03.01.2018
(21) Anmeldenummer: 11009829.0
(22) Anmeldetag: 13.12.2011
(51) Int. Cl.: B60R 16/023, G01S 7/40, B60W 30/16

(54) **VERFAHREN ZUR ERKENNUNG VON FUNKTIONSFEHLERN EINER MULTISENSORANORDNUNG**
Method for recognising function errors of a multi-sensor assembly
Procédé de détection d'erreurs de fonctionnement d'un dispositif multicapteurs

(43) Veröffentlichungstag der Anmeldung: 19.06.2013
(73) Patentinhaber: Aptiv Technologies Limited, St. Michael (BB)
(72) Erfinder: Müller, Dennis, 40699 Erkrath (DE); Meuter, Mirko Nicolas, 40699 Erkrath (DE); Görmer, Steffen Michael, 87785 Winterrieden (DE); Nunn, Christian Markus, 42117 Wuppertal (DE); Gavriilidis, Alexandros, 42369 Wuppertal (DE)
(74) Vertreter: Manitz Finsterwald Patent- und Rechtsanwaltspartnerschaft mbB

(56) Entgegenhaltungen:
- EP-A1- 1 634 776
- WO-A2-03/031228
- DE-A1- 10 133 945
- DE-A1- 19 856 313
- DE-A1-102005 005 720

## Beschreibung

Die vorliegende Erfindung betrifft ein Verfahren zur Erkennung von Funktionsfehlern eines oder mehrerer Sensoren einer der Überwachung einer Fahrzeugumgebung dienenden Multisensoranordnung eines Fahrzeugassistenzsystems.

Die Erfassung einer partiellen oder umfassenden Störung, einer Dekalibration, eines vollständigen Ausfalls oder einer anderweitigen Fehlfunktion eines oder mehrerer Sensoren einer Multisensoranordnung eines Datenfusionssystems ist in der Praxis von entscheidender Bedeutung, da solche Fehlfunktionen das Leistungsvermögen des betreffenden Systems stark beeinträchtigen können. Entsprechende Fehlfunktionen aufweisende Sensoren liefern entweder keine oder falsche Messergebnisse.

Die bisher bekannten Sensoren besitzen üblicherweise im jeweiligen Sensor integrierte Mittel zur Störungserfassung, wobei eine jeweilige Störung durch ein entsprechendes Sensorausgangssignal signalisiert wird. Es sind auch Sensoren mit einer automatischen Kalibrierfunktion bekannt, die dazu dient, einen dekalibrierten Zustand automatisch zu korrigieren oder einen solchen dekalibrierten Zustand zumindest zu erfassen und den zugeordneten Controller-Modulen die Nichtverfügbarkeit des betreffenden Sensors zu signalisieren.

In manchen Fällen mag mit solchen den einzelnen Sensoren zugeordneten Mitteln zwar ein vollständiger Ausfall eines jeweiligen Sensors noch relativ einfach erfassbar sein, da der betreffende Sensor nicht mehr reagiert. Derartige jeweils nur den Zustand des betreffenden Sensors berücksichtigende Mittel besitzen nun aber den Nachteil, dass bei der Fehlererfassung Informationen bezüglich des erwarteten Messergebnisses des Sensors außer Betracht bleiben.

Es sind bereits Fahrzeugassistenzsysteme bekannt, bei denen für eine vereinheitlichte Erfassung der aktuellen Fahrzeugumgebung eine Datenfusion der von den Sensoren einer Multisensoranordnung erhaltenen Daten durchgeführt wird. Durch eine solche Datenfusion können insbesondere die Zuverlässigkeit der Messung, der Messbereich und die Messgenauigkeit erhöht und zusätzliche Messdaten gewonnen werden.

In der WO 03/031228 ist ein Verfahren zur Erkennung von Funktionsfehlern eines oder mehrerer Sensoren einer der Überwachung einer Fahrzeugumgebung dienenden Multisensoranordnung eines Fahrzeugsassistenzsystems beschrieben, bei dem die von den Sensoren gemessenen Daten auf ihre Widerspruchsfreiheit überprüft und bei Erkennung eines Widerspruchs ein Fehlersignal ausgegeben wird. Dabei wird zum Beispiel anhand der Daten zumindest eines Sensors zunächst überprüft, ob sich ein Objekt im Überlappungsbereich des Detektionsbereichs dieses Sensors mit dem Detektionsbereich eines anderen Sensors befindet und das Fehlersignal ausgegeben, wenn das Objekt von dem anderen Sensor nicht geortet wird oder wenn die von diesem Sensor gemessenen Daten von denen mit dem anderen Sensor gemessenen Daten abweichen. Die festgestellten Fehler können aufgezeichnet werden. Dabei kann die statistische Häufigkeit der festgestellten Fehler bestimmt werden, wobei eine Fehlermeldung nur dann an den Fahrer ausgegeben wird, wenn ein jeweiliger festgestellter Fehler mit einer bestimmten statistischen Häufigkeit auftritt.

Der Erfindung liegt die Aufgabe zugrunde, ein Verfahren der eingangs genannten Art anzugeben, das eine zuverlässigere und genauere Fehlererkennung gewährleistet.

Diese Aufgabe wird mit den Verfahren der Ansprüche 1, 3 und 5 gelöst.

Die Erfindung macht sich den Umstand zunutze, dass die Einbeziehung von Informationen aus einer für eine vereinheitlichte Erfassung der aktuellen Fahrzeugumgebung durchgeführten Datenfusion der von den Sensoren der Multisensoranordnung erhaltenen Daten die Erkennung von Funktionsfehlern eines oder mehrer Sensoren der Multisensoranordnung verbessert oder in bestimmten Fällen erst ermöglicht. Die Multisensoranordnung kann beispielsweise sowohl ein Kamera- als auch ein Radarsystem zur Überwachung des Vorfeldes eines Fahrzeugs umfassen. In diesem Fall werden zur Verbesserung der Genauigkeit und Zuverlässigkeit der Fehlererkennung auch Informationen aus der für eine vereinheitlichte Erfassung der aktuellen Fahrzeugumgebung durchgeführten Datenfusion der von den Sensoren der kombinierten Kamera- und Radarsensoranordnung erhaltenen Daten mit einbezogen.

Arbeiten alle Sensoren der betreffenden Multisensoranordnung korrekt und entsprechend ihrer jeweiligen Spezifikation, so wird ein jeweiliges durch das Fahrzeugassistenzsystem bzw. dessen Multisensoranordnung überwachtes Objekt nicht nur durch einen, sondern auch durch die übrigen Sensoren der Multisensoranordnung erfasst, solange das betreffende Objekt innerhalb des sich überschneidenden Bereichs der Gesichtsfelder der betreffenden Sensoren liegt. Funktioniert jedoch einer der Sensoren fehlerhaft, so ist er entweder außer Stande, das betreffende Objekt zu erfassen, oder er liefert falsche Messergebnisse.

Wir das betreffende Objekt überhaupt nicht mehr erfasst, so kann dieser Funktionsfehler über die Datenfusion erfasst werden, da diese die Information umfasst, dass das Objekt in der Regel durch wenigstens einen anderen voll funktionsfähigen Sensor erfasst werden muss. Wird das betreffende Objekt erfasst und ist der betreffende Messwert beispielsweise aufgrund einer geringfügigen Dekalibrierung des Sensoraufbaus leicht fehlerhaft, so kann dies über die Datenfusion festgestellt werden, da sich dann zwischen den Messergebnissen zweier dasselbe Objekt überwachender Sensoren eine Abweichung ergibt. Liefert der fehlerhafte Sensor völlig falsche Messergebnisse, so erfolgt über die Datenfusion keine gegenseitige Zuordnung der beiden beispielsweise über ein Kamera- und ein Radarsystem gelieferten Überwachungsergebnisse. In diesem Fall liegen zwei interne Objekte oder Ziele vor, in denen jeweils ein Partner in Form eines Messergebnisses des anderen Sensors fehlt. Auch dieser Zustand kann somit eindeutig erfasst werden. Sind mehr als zwei Sensoren verfügbar, so können deren bezüglich eines gemeinsam überwachten Objektes erhaltene Messergebnisse entsprechend miteinander verglichen werden.

Die Datenfusion der von den Sensoren der Multisensoranordnung erhaltenen Daten dient der vereinheitlichten Erfassung der aktuellen Fahrzeugumgebung, beispielsweise der vereinheitlichten Erfassung aller überwachten Fahrbahnbenutzer. Aus der Fachliteratur sind viele unterschiedliche Strategien für den Erhalt einer vereinheitlichten Erfassung der Fahrzeugumgebung bekannt. Dazu zählt beispielsweise der Einsatz eines Tracker-Systems, das seine eigene Liste von Objekten oder Zielen führt und Messergebnisse aller verfügbaren Sensoren verwendet, um seine internen Zustände zu aktualisieren. Ein solches System ist auch als "Sensor-to-Track"-Datenfusionssystem bekannt. Weitere Beispiele umfassen ein "Track-to-Track"-Datenfusionssystem, bei dem beispielsweise ein Abstand zwischen einem vorangehenden und einem unabhängig erfolgten Sensormessergebnis berechnet und in einem iterativen Kostenminimierungs-Assoziierungsschema, zum Beispiel unter Einsatz der Ungarischen Methode, verwendet wird.

Im Vordergrund steht jedoch nicht die jeweilige konkrete Ausführung des Algorithmus für diese vereinheitlichte Darstellung. Maßgeblich ist vielmehr das Vorliegen einer solchen vereinheitlichten Darstellung oder Erfassung der aktuellen Fahrzeugumgebung und die Verfügbarkeit von Informationen darüber, welche Sensormesswerte bzw. Messwerte welcher Sensoren für den Erhalt dieser Darstellung verwendet werden. Auf der Basis dieser Informationen können im Zusammenhang mit der erfindungsgemäßen Fehlererkennung laufend statistische Größen bezüglich des Leistungsvermögens des Fahrzeugassistenzsystems bzw. deren Multisensoranordnung berechnet und mit einem insbesondere offline erlernten erwarteten Leistungsvermögen verglichen werden.

Gemäß einer bevorzugten Ausgestaltung des erfindungsgemäßen Verfahrens umfassen die zur Ermittlung der aktuellen Leistungsgröße der Multisensoranordnung herangezogenen Informationen aus der Datenfusion Informationen, die auf Messergebnissen wenigstens eines Sensorpaares basieren, dessen Sensoren dasselbe in der aktuellen Fahrzeugumgebung befindliche Objekt überwachen.

In der Multisensoranordnung sind zumindest zwei Sensoren verfügbar. Im einfachsten Fall sind genau zwei solche Sensoren, zum Beispiel ein Radar-und ein Kamerasystem, mit demselben oder zumindest im Wesentlichen demselben Gesichtsfeld vorgesehen.

Bevorzugt umfassen die zur Ermittlung der aktuellen Leistungsgröße der Multisensoranordnung herangezogenen Informationen aus der Datenfusion Informationen, die für den Grad an Übereinstimmung der Messergebnisse der dasselbe Objekt überwachenden Sensoren des Sensorpaares repräsentativ sind.

Gemäß einer bevorzugten praktischen Ausgestaltung des erfindungsgemäßen Verfahrens umfassen die zur Ermittlung der aktuellen Leistungsgröße der Multisensoranordnung herangezogenen Informationen aus der Datenfusion auf Messergebnissen des Sensorpaares basierende, dem betreffenden Objekt zugeordnete Raumvektoren, insbesondere Seiten-und/oder Längs-Raumvektoren.

Dabei kann zur Ermittlung der aktuellen Leistungsgröße der Multisensoranordnung aus den auf den Messergebnissen des Sensorpaares basierenden dem betreffenden Objekt zugeordneten Raumvektoren vorteilhafterweise ein Differenzraumvektor, insbesondere Seiten- und/oder Längs-Differenzraumvektor bestimmt werden.

Von Vorteil ist insbesondere, wenn zur Ermittlung der aktuellen Leistungsgröße der Multisensoranordnung der Differenzraumvektor quantisiert und über mehrere durch das Sensorpaar überwachte Objekte die Wahrscheinlichkeitsverteilung des quantisierten Differenzraumvektors bestimmt wird.

Alternativ oder zusätzlich können die zur Ermittlung der aktuellen Leistungsgröße der Multisensoranordnung herangezogenen Informationen aus der Datenfusion insbesondere auch Informationen über die Zeit umfassen, während der gleichzeitig beide Sensoren des Sensorpaares Messergebnisse bezüglich des betreffenden Objektes liefern.

Von Vorteil ist hierbei insbesondere, wenn zur Ermittlung der aktuellen Leistungsgröße der Multisensoranordnung die Zeit, während der gleichzeitig beide Sensoren des Sensorpaares Messergebnisse bezüglich eines Objektes liefern, quantisiert und über mehrere durch das Sensorpaar überwachte Objekte die Wahrscheinlichkeitsverteilung der quantisierten Zeit bestimmt wird.

Alternativ oder zusätzlich kann zur Ermittlung der aktuellen Leistungsgröße der Multisensoranordnung insbesondere auch das Verhältnis zwischen der Zeit, innerhalb der einer der beiden Sensoren des Sensorpaares während einer vorgebbaren Zeitspanne Messergebnisse bezüglich des betreffenden Objektes liefert, und der Zeit berechnet werden, während der gleichzeitig auch der andere Sensor des Sensorpaares Messergebnisse bezüglich des betreffenden Objektes liefert.

Hierbei ist insbesondere von Vorteil, wenn zur Ermittlung der aktuellen Leistungsgröße der Multisensoranordnung das Verhältnis zwischen der Zeit, innerhalb der einer der beiden Sensoren des Sensorpaares während einer vorgebbaren Zeitspanne Messergebnisse bezüglich eines jeweiligen Objektes liefert, und der Zeit, während der gleichzeitig beide Sensoren des Sensorpaares Messergebnisse bezüglich des jeweiligen Objektes liefern, quantisiert und über mehrere durch das Sensorpaar überwachte Objekte die Wahrscheinlichkeitsverteilung des quantisierten Zeitverhältnisses bestimmt wird.

Die Wahrscheinlichkeitsverteilung des quantisierten Differenzraumvektors, der quantisierten Zeit bzw. des quantisierten Zeitverhältnisses kann vorteilhafterweise über alle durch das Sensorpaar überwachten Objekte bestimmt werden. Es können beispielsweise entsprechende Histogramme erstellt werden, die zur Fehlerbewertung mit erwarteten Histogrammen verglichen werden können.

In bestimmten Fällen kann es jedoch auch von Vorteil sein, wenn die Gesamtheit der von dem Sensorpaar überwachten Objekte in Gruppen von überwachten Objekten unterteilt und für jede einzelne Gruppe von überwachten Objekten jeweils die Wahrscheinlichkeitsverteilung des quantisierten Differenzraumvektors, der quantisierten Zeit bzw. des quantisierten Zeitverhältnisses bestimmt wird. In diesem Fall könnten für die verschiedenen Gruppen von Objekten entsprechende Histogramme erstellt werden.

Die in Frage kommenden Leistungsgrößen der Multisensoranordnung können also beispielsweise einen auf den Messergebnissen eines Sensorpaares basierenden, einem gemeinsam überwachten Objekt zugeordneten Seiten- und/oder Längs-Differenzraumvektor umfassen. Ein solcher Differenzraumvektor kann quantisiert werden, und die Wahrscheinlichkeitsverteilung des quantisierten Signals kann beispielsweise durch die Berechnung eines Histogramms dieses Vektors analysiert werden. Das Histogramm kann über alle beobachtete Objekte innerhalb einer vorgegebenen Zeitspanne berechnet werden. Die überwachten Objekte können innerhalb der vorgegebenen Zeitspanne jedoch auch in unterschiedliche relevante Gruppen unterteilt werden, bevor für jede einzelne Gruppe ein Histogramm berechnet wird.

Alternativ oder zusätzlich ist auch eine Leistungsgröße der Multisensoranordnung denkbar, die das mittlere Verhältnis der Zeit umfasst, während der ein von einem Sensor A erfasstes Objekt gleichzeitig von einem Sensor B erfasst wird, sodass das Messergebnis des Sensors A dem des Sensors B zugeordnet werden. Zur Berechnung dieses mittleren Verhältnisses können wieder sämtliche erfassten Objekte innerhalb einer bestimmten Zeitspanne herangezogen werden, oder die erfassten Objekte können auch wieder in Gruppen unterteilt werden. So können beispielsweise nur solche Objekte ausgewählt werden, die länger als eine bestimmte Zeitdauer, zum Beispiel länger als 2 Sekunden, erfasst werden. Es kann auch wieder die Wahrscheinlichkeitsverteilung dieses Verhältnisses durch Quantisieren des aktuellen Verhältnisses und Akkumulation der verfügbaren Information über das vorgebbare Zeitintervall in unterschiedlichen Kästchen oder Balken eines Histogramms berechnet werden. Es ist von Vorteil, wenn dieses Lebenszeit-Zuordnungsverhältnis in beiden Richtungen berechnet wird. So kann sowohl das Verhältnis zwischen der Zeit, innerhalb der ein Sensor A während einer vorgebbaren Zeitspanne Messergebnisse bezüglich des betreffenden Objektes liefert, und der Zeit berechnet werden, während der Sensor B Messergebnisse bezüglich des betreffenden Objekts liefert, also auch das Verhältnis zwischen der Zeit, innerhalb der der Sensor B während der vorgebbaren Zeitspanne Messergebnisse bezüglich des betreffenden Objektes liefert, und der Zeit berechnet werden, während der gleichzeitig auch der Sensor A Messergebnisse bezüglich des betreffenden Objektes liefert.

Bei einer Multisensoranordnung mit mehr als zwei Sensoren kann z.B. jedes mögliche Sensorpaar als unabhängige Multisensoranordnung behandelt werden, und es kann wieder wenigstens eine der genannten Leistungsgrößen wie zuvor beschrieben berechnet werden.

Zum "Lernen" der erwarteten Leistungsgröße der Multisensoranordnung kann ein überwachtes Trainingsszenario verwendet werden, bei dem das Fahrzeugassistenzsystem bzw. die Multisensoranordnung mit aufgezeichneten Daten aus Testläufen in der realen Welt versorgt wird, wobei sichergestellt wurde, dass jeder einzelne Sensor wie erwartet arbeitet, so dass weder ein teilweiser noch ein totaler Ausfall der Sensoren vorliegt und sämtliche Sensoren korrekt kalibriert sind sowie jeder Sensor entsprechend seiner Spezifikation arbeitet. Vorteilhafterweise wird eine große Anzahl von Testdaten aus der realen Welt verwendet, um die erwarteten Leistungsgrößen zu "erlernen", wobei beispielsweise das mittlere räumliche Differenzvektorhistogramm über alle Testdatenfolgen ermittelt wird.

Während eines Online-Einsatzes des Systems können dann wieder die dem aktuellen Systemzustand entsprechenden aktuellen Leistungsgrößen berechnet werden. Das Ergebnis kann dann mit den erwarteten, offline ermittelten Leistungsgrößen verglichen werden. Dieser Vergleich kann beispielsweise unter Verwendung des Pearson-Chi-Quadrat-Koeffizient-Tests oder irgendeiner anderen Abstandsmetrik, die für die Leistungsgröße anwendbar ist, durchgeführt werden.

Eine endgültige Entscheidung darüber, ob einer oder mehrere der Sensoren bzw. die gesamte Multisensoranordnung fehlerhaft funktioniert, kann auf der Basis des Ergebnisses dieser Vergleiche getroffen werden. Beispielsweise mittels eines einfachen Algorithmus kann dann festgestellt werden, dass die Multisensoranordnung sich in einem fehlerhaften Zustand befindet, falls einer der Tests fehlschlägt. Es sind beispielsweise auch komplexere Strategien denkbar. So können beispielsweise zusätzliche, rechnerisch anspruchsvollere Leistungsgrößen berechnet werden, falls ein einfacherer Test eine Fehlfunktion eines Sensors anzeigt, um einen weiteren Nachweis für die Hypothese einer Funktionsstörung zu liefern.

Zweckmäßigerweise wird die aktuelle Leistungsgröße der Multisensoranordnung bei fahrendem Fahrzeug in vorgebbaren Zeitabständen jeweils neu ermittelt.

Dabei können innerhalb aufeinanderfolgender Zeitabschnitte jeweils mehrere Momentanwerte der Leistungsgröße der Multisensoranordnung bestimmt werden, wobei die jeweils neu ermittelte aktuelle Leistungsgröße auf einer Mittelung der innerhalb des unmittelbar vorangehenden Zeitabschnitts bestimmten Momentanwerte basieren kann.

Zweckmäßigerweise wird jede neu ermittelte aktuelle Leistungsgröße der Multisensoranordnung jeweils mit der entsprechenden, für die fehlerfreie Multisensoranordnung erwarteten Leistungsgröße verglichen. Dabei kann beispielsweise nach jedem durchgeführten Vergleich der aktuellen Leistungsgröße mit der erwarteten Leistungsgröße jeweils auch eine vom Vergleichsergebnis abhängige Entscheidung darüber getroffen werden, ob ein Funktionsfehler eines oder mehrerer Sensoren der Multisensoranordnung vorliegt oder nicht. Grundsätzlich ist es jedoch auch möglich, eine solche Entscheidung erst nach mehreren Vergleichen zu treffen.

Die Erfindung wird im Folgenden anhand von Ausführungsbeispielen unter Bezugnahme auf die Zeichnung näher erläutert; in dieser zeigen:
- Fig. 1: eine schematische Darstellung einer Multisensoranordnung eines Fahrzeugassistenzsystems,
- Fig. 2: ein Diagramm, in dem die geschätzte Wahrscheinlichkeitsverteilung des Verhältnisses zwischen der Lebenszeit eines Radarzieles und der gesamten Zeitdauer der Zuordnung dieses Radarzieles zu einem Kameraziel der erwarteten Wahrscheinlichkeitsverteilung des betreffenden Verhältnisses gegenübergestellt ist,
- Fig. 3: ein Diagramm, in dem die geschätzte Wahrscheinlichkeitsverteilung eines weiteren Verhältnisses zwischen der Lebenszeit eines Radarzieles und der gesamten Zeitdauer der Zuordnung dieses Radarzieles zu einem Kameraziel der erwarteten Wahrscheinlichkeitsverteilung des betreffenden Verhältnisses gegenübergestellt ist, wobei ein Kamerasystem zur Erfassung von Scheinwerfern und von Rückleuchten von Fahrzeugen in der überwachten Umgebung während eines Einsatzes in der Nacht verwendet wird, und
- Fig. 4: ein Diagramm, in dem die geschätzte Wahrscheinlichkeitsverteilung einer seitlichen Abweichung zwischen der Radarmessung und der Kameramessung der erwarteten Wahrscheinlichkeitsverteilung der betreffenden Abweichung gegenübergestellt ist.

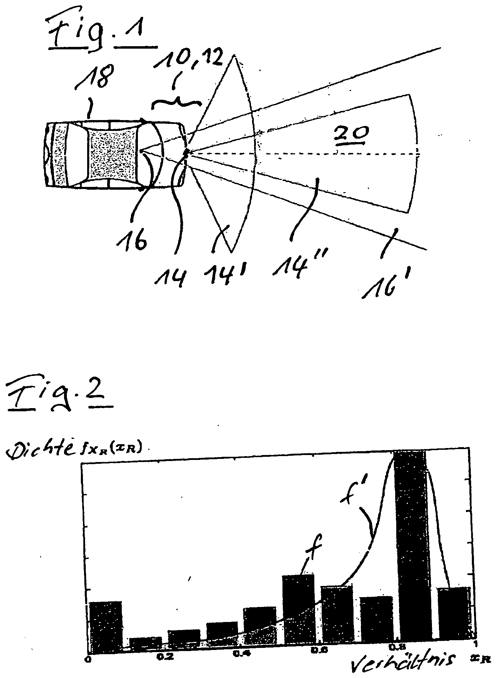

Fig. 1 zeigt in schematischer Darstellung eine Multisensoranordnung 10 eines Fahrzeugassistenzsystems 12. Dabei umfasst die Multisensoranordnung 10 zumindest zwei verfügbare Sensoren, wobei im einfachsten Fall genau zwei solche Sensoren, beim in der Fig. 1 dargestellten Ausführungsbeispiel beispielsweise ein Radarsensor 14 und ein Kamerasensor 16, vorgesehen sind, die dasselbe oder zumindest ein ähnliches Gesichtsfeld aufweisen. Beim in der Fig. 1 dargestellten Ausführungsbeispiel umfasst das Radargesichtsfeld zwei Bereiche, nämlich einen Mittelstreckenbereich 14' und einen Langstreckenbereich 14". Demgegenüber umfasst der Sichtbereich des Kamerasensors 16 einen einheitlichen Bereich 16'. Wie anhand der Fig. 1 zu erkennen ist, sind die Sichtbereiche der beiden Sensoren 14, 16 ausgehend vom Fahrzeug 18 jeweils nach vorne gerichtet.

Gemäß dem erfindungsgemäßen Verfahren wird nun zur Erkennung von Funktionsfehlern eines oder mehrerer Sensoren 14, 16 der der Überwachung einer Fahrzeugumgebung 20 dienenden Multisensoranordnung 10 des Fahrzeugassistenzsystems 12 auf der Basis von Informationen aus einer für eine vereinheitlichte Erfassung der aktuellen Fahrzeugumgebung 20 durchgeführten Datenfusion der von den Sensoren 14, 16 der Multisensoranordnung 10 erhaltenen Daten wenigstens eine aktuelle Leistungsgröße der Multisensoranordnung 10 ermittelt. Die ermittelte aktuelle Leistungsgröße wird mit einer entsprechenden, für die fehlerfreie Multisensoranordnung 10 erwarteten Leistungsgröße verglichen. Eine Entscheidung darüber, ob ein Funktionsfehler des bzw. der betreffenden Sensoren 14, 16 der Multisensoranordnung 10 bzw. der gesamten Multisensoranordnung 10 vorliegt oder nicht, wird in Abhängigkeit vom Ergebnis des Vergleichs der auf der Basis der Informationen aus der Sensordatenfusion ermittelten aktuellen Leistungsgröße mit der erwarteten Leistungsgröße der Multisensoranordnung 10 getroffen.

Die zur Ermittlung der aktuellen Leistungsgröße der Multisensoranordnung 10 herangezogenen Informationen aus der Datenfusion können Informationen umfassen, die auf Messergebnissen wenigstens eines Sensorpaares 14, 16 basieren, dessen Sensoren 14, 16 dasselbe in der aktuellen Fahrzeugumgebung 20 befindliche Objekt überwachen. Wie bereits erwähnt, umfasst das Sensorpaar im vorliegenden Fall beispielsweise den Radarsensor 14 sowie den Kamerasensor 16.

Die zur Ermittlung der aktuellen Leistungsgröße der Multisensoranordnung 10 herangezogenen Informationen aus der Datenfusion können insbesondere Informationen umfassen, die für den Grad an Übereinstimmung der Messergebnisse der dasselbe Objekt überwachenden Sensoren 14, 16 des Sensorpaares repräsentativ sind.

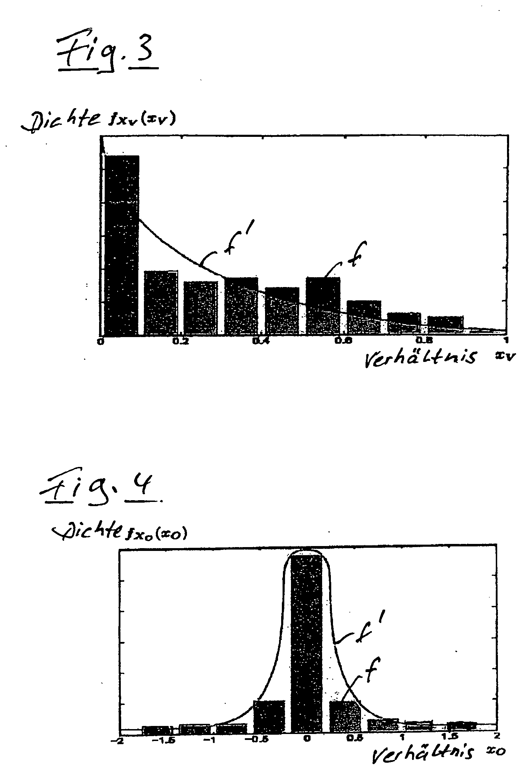

Die zur Ermittlung der aktuellen Leistungsgröße der Multisensoranordnung 10 herangezogenen Informationen aus der Datenfusion können zum Beispiel auf Messergebnissen des Sensorpaares 14, 16 basierende, dem betreffenden Objekt zugeordnete Raumvektoren, insbesondere Seiten-und/oder Längs-Raumvektoren umfassen. Dabei kann aus den dem betreffenden Objekt zugeordneten Raumvektoren beispielsweise ein Differenzraumvektor, insbesondere Seiten- und/oder Längs-Differenzraumvektor bestimmt werden. Zur Ermittlung der aktuellen Leistungsgröße der Multisensoranordnung 10 kann der Differenzraumvektor insbesondere quantisiert werden, wobei vorzugsweise über mehrere durch das Sensorpaar 14, 16 überwachte Objekte die Wahrscheinlichkeitsverteilung bzw. ein Histogramm des quantisierten Differenzraumvektors bestimmt wird (vgl. auch Fig. 4).

Die zur Ermittlung der aktuellen Leistungsgröße der Multisensoranordnung 10 herangezogenen Informationen aus der Datenfusion können insbesondere auch Informationen über die Zeit umfassen, während der gleichzeitig beide Sensoren 14, 16 des Sensorpaares Messergebnisse bezüglich des betreffenden Objektes liefern. Hierbei kann die Zeit, während der gleichzeitig beide Sensoren 14, 16 des Sensorpaares Messergebnisse bezüglich eines Objektes liefern, quantisiert und über mehrere durch das Sensorpaar 14, 16 überwachte Objekte die Wahrscheinlichkeitsverteilung bzw. ein Histogramm der quantisierten Zeit bestimmt werden.

Zur Ermittlung der aktuellen Leistungsgröße der Multisensoranordnung 10 kann insbesondere auch das Verhältnis zwischen der Zeit, innerhalb der einer der beiden Sensoren 14, 16 des Sensorpaares während einer vorgebbaren Zeitspanne Messergebnisse bezüglich des betreffenden Objektes liefert, und der Zeit berechnet werden, während der gleichzeitig auch der andere Sensor des Sensorpaares 14, 16 Messergebnisse bezüglich des betreffenden Objektes liefert. Dabei kann das Verhältnis zwischen der Zeit, innerhalb der einer der beiden Sensoren 14, 16 des Sensorpaares während einer vorgebbaren Zeitspanne Messergebnisse bezüglich eines jeweiligen Objektes liefert, und der Zeit, während der gleichzeitig beide Sensoren 14, 16 des Sensorpaares Messergebnisse bezüglich des jeweiligen Objektes liefern, quantisiert werden, und es kann über mehrere durch das Sensorpaar 14, 16 überwachte Objekte die Wahrscheinlichkeitsverteilung bzw. ein Histogramm des quantisierten Zeitverhältnisses bestimmt werden (vgl. Fig. 2).

Die Wahrscheinlichkeitsverteilung des quantisierten Differenzraumvektors, der quantisierten Zeit bzw. des quantisierten Zeitverhältnisses kann beispielsweise über alle durch das Sensorpaar 14, 16 überwachten Objekte bestimmt werden.

Es ist jedoch insbesondere auch eine solche Ausgestaltung des Verfahrens denkbar, bei der die Gesamtheit der von dem Sensorpaar 14, 16 überwachten Objekte in Gruppen von überwachten Objekten unterteilt und für jede einzelne Gruppe von überwachten Objekten jeweils die Wahrscheinlichkeitsverteilung des quantisierten Differenzraumvektors, der quantisierten Zeit bzw. des quantisierten Zeitverhältnisses bestimmt wird.

Fig. 2 zeigt ein Diagramm, in dem die geschätzte Wahrscheinlichkeitsdichteverteilung bzw. Wahrscheinlichkeitsdichtefunktion f des Verhältnisses zwischen der Lebenszeit eines Radarzieles und der gesamten Zeitdauer der Zuordnung dieses Radarzieles zu einem Kameraziel der erwarteten Wahrscheinlichkeitsverteilung bzw. erwarteten Wahrscheinlichkeitsdichtefunktion f des betreffenden Verhältnisses gegenübergestellt ist. Dabei ist die geschätzte Wahrscheinlichkeitsdichtefunktion f in Form von Balken dargestellt.

Wie anhand der Fig. 2 zu erkennen ist, ergeben sich für größere Verhältnisse größere Massen, wie zum Beispiel bei einem Verhältnis von 90 %, während beispielsweise bei einem Verhältnis von 100 % nur eine geringe Masse vorliegt. Dies ergibt insoweit einen Sinn, als das Datenfusionssystem kaum eine geeignete "Track-to-Track"-Zuordnung feststellen wird, bei der während der gesamten Zeit einer spezifischen Radarzielerfassung gleichzeitig auch eine optische Zielerfassung vorliegt, obwohl dies über die meiste Zeit der Fall ist. Es wird auch eine geringe Anzahl von Zielen geben, die durch den Radarsensor 14, jedoch nicht durch den Kamerasensor 16 erfasst werden können, sodass sich für den Balken für ein Verhältnis 0 % wie dargestellt eine leicht höhere Masse ergibt.

Die durchgezogene Kurve stellt die erwartete Wahrscheinlichkeitsdichtefunktion f für den vorliegenden Fall dar. Es ist offensichtlich, dass beispielsweise im Fall eines fehlerhaften Kamerasensors 16 die Verteilung des betreffenden Verhältnisses sich drastisch ändern wird, da die meisten der Radarziele dann keine Zuordnung mehr (Verhältnis 0 %) oder sehr geringe Zuordnungszeiten (und damit nur kleine Verhältnisse) besitzen.

Fig. 3 zeigt ein Diagramm, in dem die geschätzte Wahrscheinlichkeitsverteilung bzw. Wahrscheinlichkeitsdichtefunktion f eines weiteren Verhältnisses zwischen der Lebenszeit eines Radarzieles und der gesamten Zeitdauer der Zuordnung dieses Radarzieles zu einem Kameraziel der erwarteten Wahrscheinlichkeitsverteilung bzw. erwarteten Wahrscheinlichkeitsdichtefunktion f des betreffenden Verhältnisses gegenübergestellt ist, wobei im vorliegenden Fall ein Kamerasystem bzw. -sensor 16 zur Erfassung von Scheinwerfern und von Rückleuchten von Fahrzeugen in der überwachten Umgebung 20 (vgl. auch Fig. 1) während eines Einsatzes in der Nacht verwendet wird.

In diesem Fall liefert der Radarsensor 14 für jedes Fahrzeug nur ein Messergebnis, während der Kamerasensor 16 mehr als ein Messergebnis, üblicherweise zwei solche Messergebnisse liefert. Damit besitzen ungefähr 50 % der Ziele oder Objekte ein Lebenszeit/Zuordnungs-Verhältnis von 0, da sie keinen Partner in den Radarmessergebnissen finden, da das entsprechende Radarmessergebnis bereits dem anderen Scheinwerfer- oder Rücklicht zugeordnet ist. Die erwartete Wahrscheinlichkeitsdichtefunktion des betreffenden Verhältnisses ist wieder durch eine durchgezogene Linie dargestellt.

Es ist offensichtlich, dass beispielsweise bei einem fehlerhaften Radarsensor 14 die Wahrscheinlichkeitsverteilung des betreffenden Verhältnisses sich drastisch ändern würde, da dann nahezu sämtliche optischen Ziele keinerlei Zuordnung besitzen (Verhältnis 0 %) oder sehr kurze Zuordnungszeiten (und damit sehr kleine Verhältnisse) aufweisen würden.

Fig. 4 zeigt ein Diagramm, in dem die geschätzte Wahrscheinlichkeitsverteilung bzw. Wahrscheinlichkeitsdichtefunktion f einer seitlichen Abweichung zwischen der Radarmessung und der Kameramessung der erwarteten Wahrscheinlichkeit bzw. erwarteten Wahrscheinlichkeitsdichtefunktion f der betreffenden Abweichung gegenübergestellt ist. Die berechnete, akkumulierte Abweichung ist z.B. in Form eines Histogramms dargestellt.

Wie zu erwarten, ist die größte Masse im dem Verhältnis 0 zugeordneten Balken anzutreffen. Im Fall einer Sensor-Fehlfunktion, beispielsweise in dem Fall, dass ein Sensor eine leichte Dekalibrierung aufweist, verlagert sich die aktuelle Wahrscheinlichkeitsverteilung f der seitlichen Abweichung nach links oder rechts, womit sie sich deutlich von der wieder als durchgezogene Linie dargestellten erwarteten Wahrscheinlichkeitsverteilung bzw. Wahrscheinlichkeitsdichtefunktion f unterscheidet.

### Bezugszeichenliste

- 10: Multisensoranordnung
- 12: Fahrzeugassistenzsystem
- 14: Radarsensor
- 14': Mittelstreckenbereich
- 14": Langstreckenbereich
- 16: Kamerasensor
- 18: Fahrzeug
- 20: Fahrzeugumgebung

- f: geschätzte aktuelle Wahrscheinlichkeitsdichtefunktion
- f': erwartete Wahrscheinlichkeitsdichtefunktion

## Patentansprüche

1. Verfahren zur Erkennung von Funktionsfehlern eines oder mehrerer Sensoren (14, 16) einer der Überwachung einer Fahrzeugumgebung (20) dienenden Multisensoranordnung (10) eines Fahrzeugassistenzsystems (12), bei dem auf der Basis von Informationen aus einer für eine vereinheitlichte Erfassung der aktuellen Fahrzeugumgebung durchgeführten Datenfusion der von den Sensoren (14, 16) der Multisensoranordnung (10) erhaltenen Daten wenigstens eine aktuelle Leistungsgröße der Multisensoranordnung (10) ermittelt wird, die ermittelte aktuelle Leistungsgröße mit einer entsprechenden, für die fehlerfreie Multisensoranordnung (10) erwarteten Leistungsgröße verglichen wird und eine Entscheidung darüber, ob ein Funktionsfehler des bzw. der betreffenden Sensoren (14, 16) der Multisensoranordnung (10) vorliegt oder nicht, in Abhängigkeit vom Ergebnis des Vergleichs der auf der Basis der Informationen aus der Sensordatenfusion ermittelten aktuellen Leistungsgröße mit der erwarteten Leistungsgröße der Multisensoranordnung (10) getroffen wird, wobei die zur Ermittlung der aktuellen Leistungsgröße der Multisensoranordnung (10) herangezogenen Informationen aus der Datenfusion Informationen umfassen, die auf Messergebnissen wenigstens eines Sensorpaares (14, 16) basieren, dessen Sensoren (14, 16) dasselbe in der aktuellen Fahrzeugumgebung befindliche Objekt überwachen, die zur Ermittlung der aktuellen Leistungsgröße der Multisensoranordnung (10) herangezogenen Informationen aus der Datenfusion auf Messergebnissen des Sensorpaares (14, 16) basierende, dem betreffenden Objekt zugeordnete Raumvektoren, insbesondere Seiten- und/oder Längs-Raumvektoren umfassen, zur Ermittlung der aktuellen Leistungsgröße der Multisensoranordnung (10) aus den auf den Messergebnissen des Sensorpaares (14, 16) basierenden, dem betreffenden Objekt zugeordneten Raumvektoren ein Differenzraumvektor, insbesondere Seiten- und/oder Längs-Differenzraumvektor bestimmt wird und zur Ermittlung der aktuellen Leistungsgröße der Multisensor-anordnung (10) der Differenzraumvektor quantisiert und über mehrere durch das Sensorpaar (14, 16) überwachte Objekte die Wahrscheinlichkeitsverteilung des quantisierten Differenzraumvektors bestimmt wird.

2. Verfahren nach Anspruch 1,
**dadurch gekennzeichnet,**
**dass** die zur Ermittlung der aktuellen Leistungsgröße der Multisensoranordnung (10) herangezogenen Informationen aus der Datenfusion Informationen umfassen, die für den Grad an Übereinstimmung der Messergebnisse der dasselbe Objekt überwachenden Sensoren (14, 16) des Sensorpaares repräsentativ sind.

3. Verfahren zur Erkennung von Funktionsfehlern eines oder mehrerer Sensoren (14, 16) einer der Überwachung einer Fahrzeugumgebung (20) dienenden Multisensoranordnung (10) eines Fahrzeugassistenzsystems (12), bei dem auf der Basis von Informationen aus einer für eine vereinheitlichte Erfassung der aktuellen Fahrzeugumgebung durchgeführten Datenfusion der von den Sensoren (14, 16) der Multisensoranordnung (10) erhaltenen Daten wenigstens eine aktuelle Leistungsgröße der Multisensoranordnung (10) ermittelt wird, die ermittelte aktuelle Leistungsgröße mit einer entsprechenden, für die fehlerfreie Multisensoranordnung (10) erwarteten Leistungsgröße verglichen wird und eine Entscheidung darüber, ob ein Funktionsfehler des bzw. der betreffenden Sensoren (14, 16) der Multisensoranordnung (10) vorliegt oder nicht, in Abhängigkeit vom Ergebnis des Vergleichs der auf der Basis der Informationen aus der Sensordatenfusion ermittelten aktuellen Leistungsgröße mit der erwarteten Leistungsgröße der Multisensoranordnung (10) getroffen wird, wobei die zur Ermittlung der aktuellen Leistungsgröße der Multisensoranordnung (10) herangezogenen Informationen aus der Datenfusion Informationen umfassen, die auf Messergebnissen wenigstens eines Sensorpaares (14, 16) basieren, dessen Sensoren (14, 16) dasselbe in der aktuellen Fahrzeugumgebung befindliche Objekt überwachen, die zur Ermittlung der aktuellen Leistungsgröße der Multisensoranordnung (10) herangezogenen Informationen aus der Datenfusion Informationen über die Zeit umfassen, während der gleichzeitig beide Sensoren (14, 16) des Sensorpaares Messergebnisse bezüglich des betreffenden Objektes liefern und zur Ermittlung der aktuellen Leistungsgröße der Multisensoranordnung (10) die Zeit, während der gleichzeitig beide Sensoren (14, 16) des Sensorpaares Messergebnisse bezüglich eines Objektes liefern, quantisiert und über mehrere durch das Sensorpaar (14, 16) überwachte Objekte die Wahrscheinlichkeitsverteilung der quantisierten Zeit bestimmt wird.

4. Verfahren nach Anspruch 3,
**dadurch gekennzeichnet,**
**dass** die zur Ermittlung der aktuellen Leistungsgröße der Multisensoranordnung (10) herangezogenen Informationen aus der Datenfusion Informationen umfassen, die für den Grad an Übereinstimmung der Messergebnisse der dasselbe Objekt überwachenden Sensoren (14, 16) des Sensorpaares repräsentativ sind.

5. Verfahren zur Erkennung von Funktionsfehlern eines oder mehrerer Sensoren (14, 16) einer der Überwachung einer Fahrzeugumgebung (20) dienenden Multisensoranordnung (10) eines Fahrzeugassistenzsystems (12), bei dem auf der Basis von Informationen aus einer für eine vereinheitlichte Erfassung der aktuellen Fahrzeugumgebung durchgeführten Datenfusion der von den Sensoren (14, 16) der Multisensoranordnung (10) erhaltenen Daten wenigstens eine aktuelle Leistungsgröße der Multisensoranordnung (10) ermittelt wird, die ermittelte aktuelle Leistungsgröße mit einer entsprechenden, für die fehlerfreie Multisensoranordnung (10) erwarteten Leistungsgröße verglichen wird und eine Entscheidung darüber, ob ein Funktionsfehler des bzw. der betreffenden Sensoren (14, 16) der Multisensoranordnung (10) vorliegt oder nicht, in Abhängigkeit vom Ergebnis des Vergleichs der auf der Basis der Informationen aus der Sensordatenfusion ermittelten aktuellen Leistungsgröße mit der erwarteten Leistungsgröße der Multisensoranordnung (10) getroffen wird, wobei die zur Ermittlung der aktuellen Leistungsgröße der Multisensoranordnung (10) herangezogenen Informationen aus der Datenfusion Informationen umfassen, die für den Grad an Übereinstimmung der Messergebnisse der dasselbe Objekt überwachenden Sensoren (14, 16) des Sensorpaares repräsentativ sind, zur Ermittlung der aktuellen Leistungsgröße der Multisensor-anordnung (10) das Verhältnis zwischen der Zeit, innerhalb der einer der beiden Sensoren (14, 16) des Sensorpaares während einer vorgebbaren Zeitspanne Messergebnisse bezüglich des betreffenden Objektes liefert, und der Zeit berechnet wird, während der gleichzeitig auch der andere Sensor des Sensorpaares (14, 16) Messergebnisse bezüglich des betreffenden Objektes liefert und zur Ermittlung der aktuellen Leistungsgröße der Multisensoranordnung (10) das Verhältnis zwischen der Zeit, innerhalb der einer der beiden Sensoren (14, 16) des Sensorpaares während einer vorgebbaren Zeitspanne Messergebnisse bezüglich eines jeweiligen Objektes liefert, und der Zeit, während der gleichzeitig beide Sensoren (14, 16) des Sensorpaares Messergebnisse bezüglich des jeweiligen Objektes liefern, quantisiert und über mehrere durch das Sensorpaar (14, 16) überwachte Objekte die Wahrscheinlichkeitsverteilung des quantisierten Zeitverhältnisses bestimmt wird.

6. Verfahren nach Anspruch 5,
**dadurch gekennzeichnet,**
**dass** die zur Ermittlung der aktuellen Leistungsgröße der Multisensoranordnung (10) herangezogenen Informationen aus der Datenfusion Informationen umfassen, die für den Grad an Übereinstimmung der Messergebnisse der dasselbe Objekt überwachenden Sensoren (14, 16) des Sensorpaares repräsentativ sind.

7. Verfahren nach einem der Ansprüche 1 bis 6,
**dadurch gekennzeichnet,**
**dass** die Wahrscheinlichkeitsverteilung des quantisierten Differenzraumvektors, der quantisierten Zeit bzw. des quantisierten Zeitverhältnisses über alle durch das Sensorpaar (14, 16) überwachten Objekte bestimmt wird.

8. Verfahren nach einem der Ansprüche 1 bis 6,
**dadurch gekennzeichnet,**
**dass** die Gesamtheit der von dem Sensorpaar (14, 16) überwachten Objekte in Gruppen von überwachten Objekten unterteilt und für jede einzelne Gruppe von überwachten Objekten jeweils die Wahrscheinlichkeitsverteilung des quantisierten Differenzraumvektors, der quantisierten Zeit bzw. des quantisierten Zeitverhältnisses bestimmt wird.

9. Verfahren nach einem der vorhergehenden Ansprüche,
**dadurch gekennzeichnet,**
**dass** die aktuelle Leistungsgröße der Multisensoranordnung (10) bei fahrendem Fahrzeug in vorgebbaren Zeitabständen jeweils neu ermittelt wird.

10. Verfahren nach Anspruch 9,
**dadurch gekennzeichnet,**
**dass** innerhalb aufeinander folgender Zeitabschnitte jeweils mehrere Momentanwerte der Leistungsgröße der Multisensoranordnung (10) bestimmt werden und die jeweils neu ermittelte aktuelle Leistungsgröße auf einer Mittelung der innerhalb des unmittelbar vorangehenden Zeitabschnitts bestimmten Momentanwerte basiert.

11. Verfahren nach einem der Ansprüche 9 oder 10,
**dadurch gekennzeichnet,**
**dass** jede neu ermittelte aktuelle Leistungsgröße der Multisensoranordnung (10) jeweils mit der entsprechenden, für die fehlerfreie Multisensoranordnung (10) erwarteten Leistungsgröße verglichen wird, wobei vorzugsweise nach jedem durchgeführten Vergleich der aktuellen Leistungsgröße mit der erwarteten Leistungsgröße jeweils auch eine vom Vergleichsergebnis abhängige Entscheidung darüber getroffen wird, ob ein Funktionsfehler eines oder mehrerer Sensoren (14, 16) der Multisensoranordnung (10) vorliegt oder nicht.

## Claims

1. A method of recognizing functional errors of one or more sensors (14, 16) of a multisensor arrangement (10) of a vehicle assistance system (12) which serves to monitor a vehicle environment (20), in which method at least one current performance value of the multisensor arrangement (10) is determined on the basis of information from a data fusion of the data obtained from the sensors (14, 16) of the multisensor arrangement (10), said data fusion being carried out for a standardized detection of the current vehicle environment, the determined current performance value is compared with a corresponding performance value expected for the error-free multisensor arrangement (10) and a decision as to whether a functional error of the respective sensor or sensors (14, 16) of the multisensor arrangement (10) is present or not, is made in dependence on the result of the comparison of the current performance value, which is determined on the basis of the information from the sensor data fusion, with the expected performance value of the multisensor arrangement (10), wherein the information from the data fusion used to determine the current performance value of the multisensor arrangement (10) comprises information which is based on measurement results of at least one sensor pair (14, 16) whose sensors (14, 16) monitor the same object located in the current vehicle environment; the information from the data fusion used to determine the current performance value of the multi-sensor arrangement (10) comprises space vectors, in particular lateral and/or longitudinal space vectors, based on measurement results of the sensor pair (14, 16) and associated with the respective object; in order to determine the current performance value of the multisensor arrangement (10), a difference space vector, in particular a lateral and/or longitudinal difference space vector, is determined from the space vectors based on the measurement results of the sensor pair (14, 16) and associated with the respective object; and, in order to determine the current performance value of the multisensor arrangement (10), the difference space vector is quantized and the probability distribution of the quantized difference space vector is determined over a plurality of objects monitored by the sensor pair (14, 16).

2. A method in accordance with claim 1,
**characterized in that**
the information from the data fusion used to determine the current performance value of the multi-sensor arrangement (10) comprises information which is representative of the degree of agreement of the measurement results of the sensors (14, 16) of the sensor pair which monitor the same object.

3. A method of recognizing functional errors of one or more sensors (14, 16) of a multisensor arrangement (10) of a vehicle assistance system (12) which serves to monitor a vehicle environment (20), in which method at least one current performance value of the multisensor arrangement (10) is determined on the basis of information from a data fusion of the data obtained from the sensors (14, 16) of the multisensor arrangement (10), said data fusion being carried out a standardized detection of the current vehicle environment, the determined current performance value is compared with a corresponding performance value expected for the error-free multisensor arrangement (10) and a decision as to whether a functional error of the respective sensor or sensors (14, 16) of the multisensor arrangement (10) is present or not, is made in dependence on the result of the comparison of the current performance value, which is determined on the basis of the information from the sensor data fusion, with the expected performance value of the multisensor arrangement (10), wherein the information from the data fusion used to determine the current performance value of the multisensor arrangement (10) comprises information which is based on measurement results of at least one sensor pair (14, 16) whose sensors (14, 16) monitor the same object located in the current vehicle environment; the information from the data fusion used to determine the current performance value of the multi-sensor arrangement (10) comprises information on the time during which both sensors (14, 16) of the sensor pair simultaneously provide measurement results with respect to the respective object; and, in order to determine the current performance value of the multisensor arrangement (10), the time during which both sensors (14, 16) of the sensor pair simultaneously provide measurement results with respect to an object is quantized and the probability distribution of the quantized time is determined over a plurality of objects monitored by the sensor pair (14, 16).

4. A method in accordance with claim 3,
**characterized in that**
the information from the data fusion used to determine the current performance value of the multi-sensor arrangement (10) comprises information which is representative of the degree of agreement of the measurement results of the sensors (14, 16) of the sensor pair which monitor the same object.

5. A method of recognizing functional errors of one or more sensors (14, 16) of a multisensor arrangement (10) of a vehicle assistance system (12) which serves to monitor a vehicle environment (20), in which method at least one current performance value of the multisensor arrangement (10) is determined on the basis of information from a data fusion of the data obtained from the sensors (14, 16) of the multisensor arrangement (10), said data fusion being carried out for a standardized detection of the current vehicle environment, the determined current performance value is compared with a corresponding performance value expected for the error-free multisensor arrangement (10) and a decision as to whether a functional error of the respective sensor or sensors (14, 16) of the multisensor arrangement (10) is present or not, is made in dependence on the result of the comparison of the current performance value, which is determined on the basis of the information from the sensor data fusion, with the expected performance value of the multisensor arrangement (10), wherein the information from the data fusion used to determine the current performance value of the multisensor arrangement (10) comprises information which is representative of the degree of agreement of the measurement results of the sensors (14, 16) of the sensor pair monitoring the same object; in order to determine the current performance value of the multisensor arrangement (10), the ratio between the time within which one of the two sensors (14, 16) of the sensor pair provides measurement results with respect to the respective object during a predefinable time period and the time during which the other sensor of the sensor pair (14, 16) simultaneously also delivers measurement results with respect to the respective object is calculated; and, in order to determine the current performance value of the multisensor arrangement (10), the ratio between the time within which one of the two sensors (14, 16) of the sensor pair provides measurement results with respect to a respective object during a predefinable time period and the time during which both sensors of the sensor pair (14, 16) simultaneously deliver measurement results with respect to the respective object is quantized and the probability distribution of the quantized time ratio is determined over a plurality of objects monitored by the sensor pair (14, 16).

6. A method in accordance with claim 5,
**characterized in that**
the information from the data fusion used to determine the current performance value of the multi-sensor arrangement (10) comprises information which is representative of the degree of agreement of the measurement results of the sensors (14, 16) of the sensor pair which monitor the same object.

7. A method in accordance with any one of the claims 1 to 6,
**characterized in that**
the probability distribution of the quantized difference space vector, of the quantized time or of the quantized time ratio is determined over all the objects monitored by the sensor pair (14, 16).

8. A method in accordance with any one of the claims 1 to 6,
**characterized in that**
the totality of the objects monitored by the sensor pair (14, 16) is divided into groups of monitored objects and the probability distribution of the quantized difference space vector, of the quantized time or of the quantized time ratio is respectively determined for each individual group of monitored objects.

9. A method in accordance with any one of the preceding claims,
**characterized in that**
the current performance value of the multi-sensor arrangement (10) is respectively re-determined at predefinable time intervals when the vehicle is moving.

10. A method in accordance with claim 9,
**characterized in that**
a plurality of instantaneous values of the performance value of the multi-sensor arrangement (10) are respectively determined within consecutive time sections and the respectively re-determined current performance value is based on an averaging of the instantaneous values determined within the directly preceding time section.

11. A method in accordance with one of the claims 9 or 10,
**characterized in that**
each re-determined current performance value of the multisensor arrangement (10) is respectively compared with the corresponding performance value expected for the error-free multisensor arrangement (10), with preferably after each performed comparison of the current performance value with the expected performance value, in each case also a decision dependent on the comparison result being made as to whether a functional error of one or more sensors (14, 16) of the multisensor arrangement (10) is present or not.

## Revendications

1. Procédé de reconnaissance d'erreurs de fonctionnement d'un ou de plusieurs capteurs (14, 16) d'un agencement multi-capteur (10) d'un système d'assistance de véhicule (12), ledit agencement servant à surveiller l'environnement (20) d'un véhicule, dans lequel on détermine au moins un facteur de performance actuel de l'agencement multi-capteur (10) en se basant sur des informations provenant d'une fusion de données, exécutée pour une détection uniformisée de l'environnement actuel du véhicule, des données obtenues des capteurs (14, 16) de l'agencement multi-capteur (10), on compare le facteur de performance actuel déterminé à un facteur de performance correspondant attendu pour l'état exempt d'erreur de l'agencement multi-capteur (10), et on décide si une erreur de fonctionnement du ou des capteurs correspondants (14, 16) de l'agencement multi-capteur (10) se présente ou non, en fonction du résultat de la comparaison du facteur de performance actuel, déterminé en se basant sur les informations provenant de la fusion de données des capteurs, au facteur de performance attendu de l'agencement multi-capteur (10),
dans lequel
les informations provenant de la fusion de données, auxquelles on a recours pour déterminer le facteur de performance actuel de l'agencement multi-capteur (10), incluent des informations basées sur des résultats de mesure d'au moins une paire de capteurs (14, 16) dont les capteurs (14, 16) surveillent le même objet situé dans l'environnement actuel du véhicule, les informations provenant de la fusion de données, auxquelles on a recours pour déterminer le facteur de performance actuel de l'agencement multi-capteur (10), incluent des vecteurs d'espace basés sur des résultats de mesure de la paire de capteurs (14, 16) et associés à l'objet concerné, en particulier des vecteurs d'espace latéraux et/ou longitudinaux,
pour déterminer le facteur de performance actuel de l'agencement multi-capteur (10) à partir des vecteurs d'espace basés sur les résultats de mesure de la paire de capteurs (14, 16) et associés à l'objet concerné, on détermine un vecteur d'espace différentiel, en particulier un vecteur d'espace différentiel latéral et/ou longitudinal, et
pour déterminer le facteur de performance actuel de l'agencement multi-capteur (10), on quantifie le vecteur d'espace différentiel, et on détermine la distribution de probabilité du vecteur d'espace différentiel quantifié sur plusieurs objets surveillés par la paire de capteurs (14, 16).

2. Procédé selon la revendication 1,
**caractérisé en ce que**
les informations provenant de la fusion de données, auxquelles on a recours pour déterminer le facteur de performance actuel de l'agencement multi-capteur (10), incluent des informations qui sont représentatives pour le degré de concordance des résultats de mesure des capteurs (14, 16) de la paire de capteurs qui surveillent le même objet.

3. Procédé de reconnaissance d'erreurs de fonctionnement d'un ou de plusieurs capteurs (14, 16) d'un agencement multi-capteur (10) d'un système d'assistance de véhicule (12), ledit agencement servant à surveiller l'environnement (20) d'un véhicule, dans lequel on détermine au moins un facteur de performance actuel de l'agencement multi-capteur (10) en se basant sur des informations provenant d'une fusion de données, exécutée pour une détection uniformisée de l'environnement actuel du véhicule, des données obtenues des capteurs (14, 16) de l'agencement multi-capteur (10), on compare le facteur de performance actuel déterminé à un facteur de performance correspondant attendu pour l'état exempt d'erreur de l'agencement multi-capteur (10), et on décide si une erreur de fonctionnement du ou des capteurs correspondants (14, 16) de l'agencement multi-capteur (10) se présente ou non, en fonction du résultat de la comparaison du facteur de performance actuel, déterminé en se basant sur les informations provenant de la fusion de données des capteurs, au facteur de performance attendu de l'agencement multi-capteur (10),
dans lequel
les informations provenant de la fusion de données, auxquelles on a recours pour déterminer le facteur de performance actuel de l'agencement multi-capteur (10), incluent des informations basées sur des résultats de mesure d'au moins une paire de capteurs (14, 16) dont les capteurs (14, 16) surveillent le même objet situé dans l'environnement actuel du véhicule, les informations provenant de la fusion de données, auxquelles on a recours pour déterminer le facteur de performance actuel de l'agencement multi-capteur (10), incluent des informations sur le temps pendant lequel les deux capteurs (14, 16) de la paire de capteurs fournissent simultanément des résultats de mesure par rapport à l'objet concerné, et
pour déterminer le facteur de performance actuel de l'agencement multi-capteur (10), on quantifie le temps pendant lequel les deux capteurs (14, 16) de la paire de capteurs fournissent simultanément des résultats de mesure par rapport à un objet, et on détermine la distribution de probabilité du temps quantifié sur plusieurs objets surveillés par la paire de capteurs (14, 16).

4. Procédé selon la revendication 3,
**caractérisé en ce que**
les informations provenant de la fusion de données, auxquelles on a recours pour déterminer le facteur de performance actuel de l'agencement multi-capteur (10), incluent des informations qui sont représentatives pour le degré de concordance des résultats de mesure des capteurs (14, 16) de la paire de capteurs qui surveillent le même objet.

5. Procédé de reconnaissance d'erreurs de fonctionnement d'un ou de plusieurs capteurs (14, 16) d'un agencement multi-capteur (10) d'un système d'assistance de véhicule (12), ledit agencement servant à surveiller l'environnement (20) d'un véhicule, dans lequel on détermine au moins un facteur de performance actuel de l'agencement multi-capteur (10) en se basant sur des informations provenant d'une fusion de données, exécutée pour une détection uniformisée de l'environnement actuel du véhicule, des données obtenues des capteurs (14, 16) de l'agencement multi-capteur (10), on compare le facteur de performance actuel déterminé à un facteur de performance correspondant attendu pour l'état exempt d'erreur de l'agencement multi-capteur (10), et on décide si une erreur de fonctionnement du ou des capteurs correspondants (14, 16) de l'agencement multi-capteur (10) se présente ou non, en fonction du résultat de la comparaison du facteur de performance actuel, déterminé en se basant sur les informations provenant de la fusion de données des capteurs, au facteur de performance attendu de l'agencement multi-capteur (10),
dans lequel
les informations provenant de la fusion de données, auxquelles on a recours pour déterminer le facteur de performance actuel de l'agencement multi-capteur (10), incluent des informations qui sont représentatives pour le degré de concordance des résultats de mesure des capteurs (14, 16) de la paire de capteurs qui surveillent le même objet,
pour déterminer le facteur de performance actuel de l'agencement multi-capteur (10), on calcule le rapport du temps dans lequel l'un des deux capteurs (14, 16) de la paire de capteurs fournit des résultats de mesure par rapport à l'objet concerné pendant une durée de temps donnée, sur le temps pendant lequel également l'autre capteur de la paire de capteurs (14, 16) fournit simultanément des résultats de mesure par rapport à l'objet concerné, et
pour déterminer le facteur de performance actuel de l'agencement multi-capteur (10), on quantifie le rapport du temps dans lequel l'un des deux capteurs (14, 16) de la paire de capteurs fournit des résultats de mesure par rapport à un objet respectif pendant une durée de temps donnée, sur le temps pendant lequel les deux capteurs (14, 16) de la paire de capteurs fournissent simultanément des résultats de mesure par rapport à l'objet respectif, et
on détermine la distribution de probabilité du rapport de temps quantifié sur plusieurs objets surveillés par la paire de capteurs (14, 16).

6. Procédé selon la revendication 5,
**caractérisé en ce que**
les informations provenant de la fusion de données, auxquelles on a recours pour déterminer le facteur de performance actuel de l'agencement multi-capteur (10), incluent des informations qui sont représentatives pour le degré de concordance des résultats de mesure des capteurs (14, 16) de la paire de capteurs qui surveillent le même objet.

7. Procédé selon l'une des revendications 1 à 6,
**caractérisé en ce que**
on détermine la distribution de probabilité du vecteur d'espace différentiel quantifié, du temps quantifié ou du rapport de temps quantifié sur tous les objets surveillés par la paire de capteurs (14, 16).

8. Procédé selon l'une des revendications 1 à 6,
**caractérisé en ce que**
l'ensemble des objets surveillés par la paire de capteurs (14, 16) est subdivisé en groupes d'objets surveillés, et on détermine pour chaque groupe individuel d'objets surveillés respectivement la distribution de probabilité du vecteur d'espace différentiel quantifié, du temps quantifié ou du rapport de temps quantifié.

9. Procédé selon l'une des revendications précédentes,
**caractérisé en ce que**
on détermine chaque fois de nouveau le facteur de performance actuel de l'agencement multi-capteur (10) à des intervalles de temps donnés, le véhicule étant en circulation.

10. Procédé selon la revendication 9,
**caractérisé en ce que**
à l'intérieur d'intervalles de temps successifs, on définit plusieurs valeurs momentanées du facteur de performance de l'agencement multi-capteur (10), et le facteur de performance actuel respectif nouvellement déterminé est basé sur une formation de moyenne des valeurs momentanées définies dans l'intervalle de temps directement précédent.

11. Procédé selon l'une des revendications 9 ou 10,
**caractérisé en ce que**
on compare chaque facteur de performance actuel nouvellement déterminé de l'agencement multi-capteur (10) au facteur de performance correspondant attendu pour l'état exempt d'erreur de l'agencement multi-capteur (10), et de préférence après chaque comparaison effectuée du facteur de performance actuel au facteur de performance attendu, on décide également en fonction du résultat de comparaison, si une erreur de fonctionnement d'un ou de plusieurs capteurs (14, 16) de l'agencement multi-capteur (10) se présente ou non.
